# EUROPEAN PATENT APPLICATION

(11) **EP 4 556 858 A1**
(43) Date of publication of application: **21.05.2025**
(21) Application number: 23210925.6
(22) Date of filing: 20.11.2023
(51) Int. Cl.: G01D 4/00, G06V 10/44, G06V 10/82, G06T 7/80, G01F 25/10, G06N 3/02

(54) **AI-BASED CALIBRATION METHOD FOR ANALOG FLOW METER MEASUREMENT READOUT OPTIMIZATION**

(71) Applicant: Waltero Holding AB, 223 63 Lund (SE)
(72) Inventor: Lindoff, Bengt, 237 35 Bjärred (SE); Storm, Kristian, 24562 Hjärup (SE); Argelius, Andreas, 26354 Lerberget (SE); Söderman, Max, 22479 Lund (SE)
(74) Representative: Invent Horizon IP

(57) **Abstract**

The abstract describes a calibration method for an analog flow meter measurement module. The method includes monitoring a calibration trigger signal, configuring a first camera setting, detecting a Region of Interest (Rol) in an image of the analog flow meter display using a first AI/ML algorithm, performing a measurement readout of the Rol using a second AI/ML algorithm, determining a reliability measure for the measurement readout, repeating the process for all camera settings, and selecting a camera setting with the best reliability measure. The calibration method enables accurate and reliable measurement readouts from analog flow meters using AI and machine learning algorithms.

## Description

### Field

The technology relates to the field of analog flow meter measurement and calibration, specifically focusing on improving the accuracy and reliability of measurement readouts using artificial intelligence (Al) and machine learning (ML) algorithms.

### Background

Analog flow meters are widely used for measuring the consumption of water, gas, and electricity in residential, commercial, and industrial settings. These meters typically require manual readout to determine the consumption levels, which can be time-consuming, labor-intensive, and prone to human error. Furthermore, the increasing demand for remote monitoring and control of utility consumption has led to the need for connecting analog flow meters to the Internet for remote measurement readout.

One approach to achieve remote readout is to attach a battery-driven measurement module to the analog flow meter. This module typically includes a communication unit, a camera, and a processor with image recognition capabilities for digitalization of the meter readings. However, the battery life of such modules is limited, and therefore, both the communication and image recognition processing should be power optimized to ensure the module can last for several years.

A significant challenge in achieving power-efficient calibration of the measurement module is the variability in meter types and installation angles. Different meter types and installation angles can affect the camera's ability to accurately capture and digitize the meter readings. This requires individual calibration and adjustment of the camera settings for each meter. Additionally, the presence of dirt and display deficiencies such as scratches on analog meters can obstruct the camera's view, leading to inaccurate digitalization of the meter readings. This necessitates individual retuning of the camera settings for each meter to ensure accurate readings.

Existing methods for performing flow meter readings with image recognition, such as those disclosed in US10612940B2, involve recognizing a type of device according to a database of meters, generating a mask for any following image based on the mobile device and the first image, and analyzing the following image to extract information based on the image recognition related to the type of device. However, these methods do not address the challenges of determining camera settings for optimized image recognition performance and minimizing power consumption in the measurement module for optimized battery life length.

Therefore, there is a need for an improved calibration method for analog flow meter measurement modules that can automatically and power-efficiently calibrate the camera settings, taking into account the variability in meter types, installation angles, and the presence of dirt and display deficiencies on the analog meters.

### Summary

According to a first aspect of the disclosure, a calibration method is provided for a measurement module designed for attachment to an analog flow meter. The measurement module includes a camera with a variety of possible settings. The method involves monitoring a calibration trigger signal using a control unit, configuring the camera according to a first camera setting using the control unit, and detecting a Region of Interest (Rol) in an image of the analog flow meter display, generated using the camera, using a first AI/ML algorithm by an image recognition unit. The method also includes performing a measurement readout of the Rol using a second AI/ML algorithm by the image recognition unit, determining a reliability measure for the measurement readout by the image recognition unit, repeating the steps for at least a second camera setting, and selecting a camera setting with the best reliability measure by the control unit. This aspect of the disclosure provides the advantage of enabling accurate and reliable measurement readouts from an analog flow meter by leveraging AI/ML algorithms and optimizing camera settings.

Optionally in some examples, the camera settings can include a flashlight power or gain setting, a flashlight timing, an exposure time, a zoom setting, a focus setting, an ISO sensitivity, or an aperture setting. This provides the advantage of allowing for a wide range of camera configurations to adapt to different lighting conditions, distances, and focus requirements, thereby enhancing the flexibility and adaptability of the measurement module.

Optionally in some examples, the method further includes determining an analog flow meter type for the analog flow meter associated with the selected camera setting. This provides the advantage of enabling the system to adapt to different types of analog flow meters, thereby increasing its versatility and applicability.

Optionally in some examples, the calibration trigger signal can be a signal generated once the measurement module is installed, a signal generated if there is a need for recalibration due to unreliable measurement readouts, or a signal received from a server node indicating the need for recalibration. This provides the advantage of allowing for automatic and timely calibration of the measurement module, thereby ensuring accurate and reliable measurement readouts.

Optionally in some examples, the reliability measure is a function of the respective estimated number, symbol, or pointer angle reliability score. This provides the advantage of providing a quantitative measure of the reliability of the measurement readout, thereby facilitating the evaluation and selection of the best camera setting.

Optionally in some examples, the function can be the estimated number, symbol, or pointer angle having the lowest reliability score, the estimated number, symbol, or pointer angle with the second lowest reliability score, the estimated number, symbol, or pointer angle with the third lowest reliability score, or the average reliability score of the estimated numbers, symbols, or pointer angles. This provides the advantage of offering different ways to calculate the reliability measure, thereby allowing for flexibility in assessing the reliability of the measurement readout.

Optionally in some examples, the first AI/ML algorithm can be a Convolutional Neural Network (CNN), a Multi-Layer Perceptron (MLP), a Gaussian Mixture Model (GMM), or a Principal Component Analysis (PCA). This provides the advantage of leveraging different AI/ML algorithms to detect the Rol in the image, thereby enhancing the accuracy and efficiency of the detection process.

Optionally in some examples, the second AI/ML algorithm can be a Convolutional Neural Network (CNN), a Support Vector Machine (SVM), or a Recurrent Neural Network (RNN). This provides the advantage of utilizing different AI/ML algorithms to perform the measurement readout, thereby improving the accuracy and reliability of the readout.

According to a second aspect of the disclosure, a measurement module is configured to perform the calibration method. The measurement module includes a camera for capturing images of the analog flow meter display, a processor comprising a control unit and an image recognition unit, a wireless communication unit for transmitting measurement readouts to and receiving measurement configurations from a remote server node, and a battery for providing power to the camera, processor, and wireless communication unit. This aspect of the disclosure provides the advantage of integrating all necessary components into a single module, thereby simplifying the installation and operation of the system.

Optionally in some examples, the wireless communication unit uses communication protocols selected from the group consisting of WiFi, LoRa, Bluetooth, NB-loT, and NR Red Cap. This provides the advantage of enabling the measurement module to communicate with the remote server node using a variety of communication protocols, thereby enhancing the connectivity and interoperability of the system.

According to a third aspect of the disclosure, a system for calibrating a measurement module is provided. The system includes an analog flow meter measurement module, a server node configured to receive measurement readouts from the analog flow meter measurement module and transmit measurement configurations to the analog flow meter measurement module, and a communication network for enabling communication between the analog flow meter measurement module and the server node. This aspect of the disclosure provides the advantage of enabling centralized control and management of the measurement module, thereby improving the efficiency and reliability of the calibration process.

Optionally in some examples, the server node is configured to generate a calibration trigger signal based on one or more predetermined conditions. This provides the advantage of allowing for automatic generation of the calibration trigger signal, thereby facilitating timely calibration of the measurement module.

Optionally in some examples, the predetermined conditions include one or more of a scheduled calibration time, or a detected degradation in the reliability of the measurement readouts received from the measurement module. This provides the advantage of enabling proactive and timely calibration of the measurement module based on a schedule or the detected performance of the module, thereby ensuring accurate and reliable measurement readouts.

According to a fourth aspect of the disclosure, a non-transitory computer-readable medium is provided that stores instructions that, when executed by a processor of an analog flow meter measurement module, cause the analog flow meter measurement module to perform the calibration method. This aspect of the disclosure provides the advantage of enabling the implementation of the calibration method in a variety of measurement modules, thereby enhancing the versatility and applicability of the method.

### Brief Description of the Drawings

Examples are described in more detail below with reference to the appended drawings.
Figure 1 is a flowchart illustrating the calibration method for an analog flow meter measurement module.
Figure 2 is a schematic representation of the system for calibrating an analog flow meter measurement module, including a server node and the analog flow meter measurement module and the components of the analog flow meter measurement module.
Figure 3 shows two examples of analog flow meter displays with a detected Region of Interest (Rol).

### Detailed Description

The detailed description set forth below provides information and examples of the disclosed technology with sufficient detail to enable those skilled in the art to practice the disclosure.

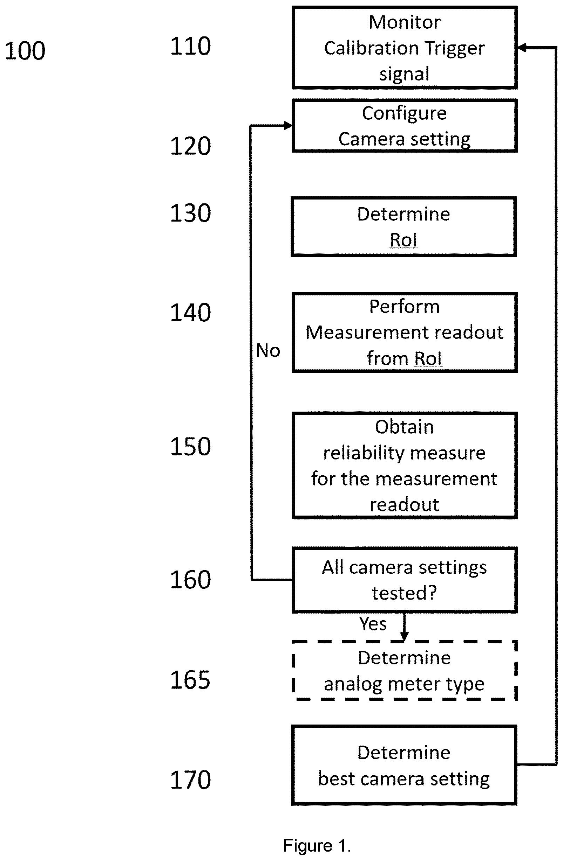

Figure 1 shows a flowchart illustrating the calibration method for an analog flow meter measurement module. The flowchart includes the following steps: monitoring 110 a calibration trigger signal by a control unit 236; configuring 120 a camera 230 with a first camera setting 232 by the control unit 236; detecting 130 a Region of Interest (Rol) in an image of the analog flow meter display 222 using a first AI/ML algorithm by an image recognition unit 238; performing 140 a measurement readout of the Rol using a second AI/ML algorithm by the image recognition unit 238; determining 150 a reliability measure for the measurement readout by the image recognition unit 238; repeating 160 the process the steps 110-150 for at least a second camera setting 232 ; and selecting 170 a camera setting 232 with the best reliability measure by the control unit 236. In an optional step, the calibration method may comprise determining (165) an analog flow meter type for the analog flow meter using the selected camera setting.

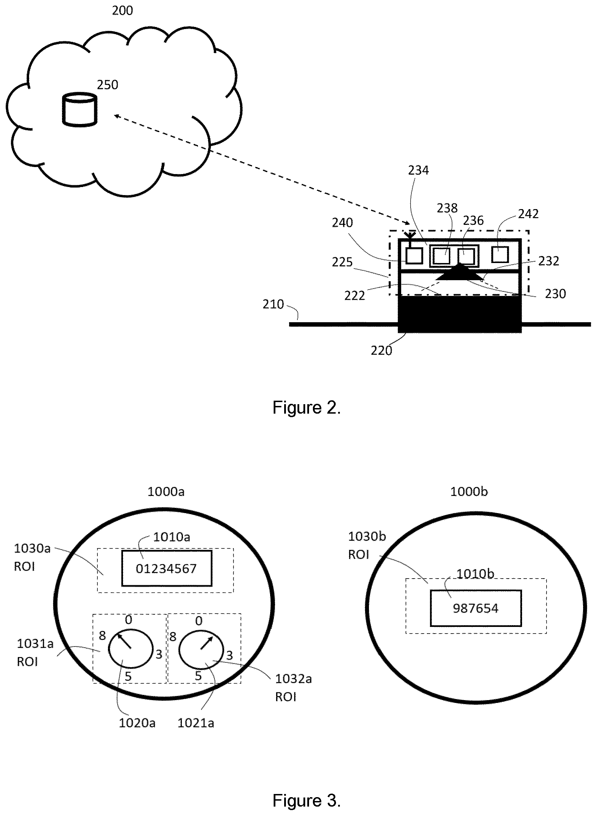

Figure 2 is a schematic representation of the system for calibrating an analog flow meter measurement module, including a server node and the analog flow meter measurement module and the components of the analog flow meter measurement module. An analog flow meter 220 that may for instance be a water meter, a gas meter or an electric meter, is connected to a water or gas pipe 210, or in case of electric meter, an electric wire 210. The measurement module 225 is attached to an analog flow meter 220 and comprises a camera 230 for capturing images of the analog flow meter display 222, a processor 234 including a control unit 236 for controlling the camera settings 232 and selecting a camera setting with the best reliability measure, and an image recognition unit 238 for detecting a Region of Interest (Rol) using a first AI/ML algorithm, performing a measurement readout using a second AI/ML algorithm, and determining a reliability measure for the measurement readout. The measurement module 225 also includes a wireless communication unit 240 for transmitting measurement readouts to and receiving measurement configurations from a remote server node 250 and may comprise a battery 242 for providing power to the camera 230, processor 234, and wireless communication unit 240.

Figure 3 shows two types of analog flow meters 1000a and 1000b according to an example. Each analog flow meter type has different regions of interest (Rol) parameters 1030a, 1031a, 1032a, and 1030b corresponding to measurement readout positions 1010a, 1020a, 1021a, 1010b on the analog meter display 222. Furthermore, Rol 1030a and 1030b corresponds to Rols comprising numbers 1010a, 1010b where measurement readout is one or more numeric values, while Rol 1031a, 1032a corresponds to Rols comprising pointers or needles, and the measurement readout is the angle of the pointer or needle which in turn represented a numeric value on the gauge (0, 3, 5, 8). The Rol parameters are used by the image recognition unit 238 to detect and analyze the measurement readouts on the analog flow meter display 222.

### 1. Component Details

The disclosure comprises several key components that work together to perform the calibration method for an analog flow meter measurement module. These components include a control unit, an image recognition unit, a camera, a processor, a wireless communication unit, and a battery. Each of these components plays a role in the operation of the invention and contributes to its overall functionality and performance.

### 1.1. Control Unit 236

In some examples, the control unit 236 is a component of the measurement module 225. It is responsible for monitoring the calibration trigger signal 110 and configuring the camera settings 232. The control unit 236 initiates the calibration process when it detects the calibration trigger signal. This signal can be generated under various circumstances, such as when the measurement module is installed, when there is a need for recalibration due to unreliable measurement readouts, or when a signal is received from the server node 250 indicating the need for recalibration.

### 1.1.1. Functions and Responsibilities

The control unit 236 has several functions and responsibilities. It is responsible for detecting the calibration trigger signal and initiating the calibration process. It also controls the camera 230 and configures the camera settings 232 according to the first camera setting 120. The control unit 236 adjusts various camera settings 232 such as the flashlight power or gain setting, flashlight timing, exposure time, zoom setting, focus setting, ISO sensitivity, and aperture setting. These adjustments are crucial for capturing high-quality images of the analog flow meter display 222 under different lighting conditions and distances.

### 1.1.2. Interaction with Other Components

The control unit 236 interacts with other components of the measurement module 225 to perform its functions. It works closely with the camera 230 to adjust its settings and capture images of the analog flow meter display 222. The control unit 236 also interacts with the image recognition unit 238 to detect the Region of Interest (Rol) in the captured image using the first AI/ML algorithm 130 and perform the measurement readout using the second AI/ML algorithm 140. Furthermore, the control unit 236 communicates with the wireless communication unit 240 to transmit measurement readouts to and receive measurement configurations from the remote server node 250.

### 1.2. Image Recognition Unit 238

In some examples, the image recognition unit 238 is another key component of the measurement module 225. It uses AI/ML algorithms to detect the Region of Interest (Rol) in the captured image and perform the measurement readout.

### 1.2.1. AI/ML Algorithms

The image recognition unit 238 may utilize various AI/ML algorithms to perform its functions. For instance, it may use a Convolutional Neural Network (CNN) or Multi-Layer Perceptron (MLP) to detect and classify the numbers and symbols on the analog flow meter display 222 based on their shape and arrangement. It may also use a Gaussian Mixture Model (GMM) to analyze color and texture patterns on the analog flow meter display 222 and recognize the unique characteristics of different meter types. Additionally, it may use a Principal Component Analysis (PCA) to reduce the dimensionality of the image data and extract important features for meter type identification.

### 1.3. Camera 230

In some examples, the camera 230 is an integral component of the measurement module 225. It captures images of the analog flow meter display 222, which are then processed by the image recognition unit 238 to perform the Region of Interest (Rol) detection and optionally analog flow meter type detection as well as the measurement readout.

### 1.3.1. Camera settings 232

The camera 230 has a variety of settings that can be adjusted by the control unit 236 to optimize the quality of the captured image. These settings include the flashlight power or gain setting, flashlight timing, exposure time, zoom setting, focus setting, ISO sensitivity, and aperture setting. By adjusting these settings, the control unit 236 can ensure that the camera 230 captures clear and sharp images of the analog flow meter display 222 under a wide range of lighting conditions and distances.

### 1.3.2. Image Capture Process

The camera 230 captures images of the analog flow meter display 222 when the control unit 236 detects the calibration trigger signal 110. The control unit 236 configures the camera settings 232 according to the first camera setting 120, and the camera 230 captures an image of the analog flow meter display 222. This image is then processed by the image recognition unit 238 to detect the Region of Interest (Rol) and perform the measurement readout.

### 1.4. Processor 234

In some examples, the processor 234 is a key component of the measurement module 225. It comprises the control unit 236 and the image recognition unit 238, and is responsible for executing the AI/ML algorithms and image processing techniques used by the image recognition unit 238. The processor 234 may be a microprocessor, a microcontroller, a central processing unit, a graphics processing unit, a digital signal processor, an image signal processor or a quantum processing unit.

### 1.4.1. Processing Capabilities

The processor 234 has sufficient processing power to execute complex AI/ML algorithms and image processing techniques.. This allows the measurement module 225 to perform the measurement readout quickly and accurately, even when dealing with high-resolution images or complex meter displays.

### 1.4.2. Integration with Control Unit and Image Recognition Unit

The control unit 236 and the image recognition unit 238 is integrated in the processor 234 , allowing these components to work together seamlessly. The control unit 236 configures the camera settings 232 and initiates the image capture process, while the image recognition unit 238 processes the captured image and performs the measurement readout. The processor 234 executes the AI/ML algorithms and image processing techniques used by the image recognition unit 238, ensuring that the measurement readout is accurate and reliable.

### 1.5. Wireless Communication Unit 240

In some examples, the wireless communication unit 240 is a component of the measurement module 225 that enables it to communicate with a remote server node 250. It transmits measurement readouts to the server node 250 and receives measurement configurations from the server node 250.

### 1.5.1. Communication Protocols

The wireless communication unit 240 may support various communication protocols, such as WiFi, LoRa, Bluetooth, NB-IoT, and NR Red Cap. These protocols enable the measurement module 225 to communicate with the server node 250 over different types of networks, including local area networks (LANs), wide area networks (WANs), and cellular networks.

### 1.5.2. Data Transmission Process

The wireless communication unit 240 transmits the measurement readouts to the server node 250 once the image recognition unit 238 has performed the measurement readout. The server node 250 can then analyze the measurement readouts, generate reports, and send measurement configurations back to the measurement module 225 if necessary.

### 1.6. Battery 242

In some examples, the battery 242 is a component of the measurement module 225 that provides power to the camera 230, processor 234, and wireless communication unit 240.

### 2. Method Details

The calibration method for an analog flow meter measurement module is a key aspect of the invention. This method involves several steps, each of which contributes to the overall functionality and performance of the measurement module. The method is designed to ensure accurate and reliable measurement readouts from the analog flow meter, even under challenging conditions such as low light or complex meter displays.

### 2.1. Monitoring Calibration Trigger Signal 110

In some examples, the calibration process begins with the monitoring of a calibration trigger signal 110 using the control unit 236. This signal can be generated under various circumstances, such as when the measurement module is installed, when there is a need for recalibration due to unreliable measurement readouts, or when a signal is received from the server node 250 indicating the need for recalibration. The ability to monitor and respond to a calibration trigger signal allows the measurement module to maintain accurate and reliable measurement readouts at all times.

### 2.1.1. Trigger Signal Types

The calibration trigger signal 110 can take various forms, depending on the specific circumstances that necessitate calibration. For instance, the signal can be generated once the measurement module 225 is installed, indicating that initial calibration is required. Alternatively, the signal can be generated if there is a need for recalibration due to unreliable measurement readouts, indicating that the current calibration settings are not providing accurate results. For instance, unreliable measurement readouts may be determined if the reliability measure is below a first threshold as an example, if reliability measure can be a number between 0 and 100 and 0/100 may mean 0%/100% reliability for the measurement readout, a threshold value may be 30, 50, or 70 depending on measurement readout algorithm used. In some cases, the signal may be received from a server node 250 indicating the need for recalibration, allowing for remote calibration management.

### 2.1.2. Signal Detection Process

The control unit 236 is responsible for detecting the calibration trigger signal 110. Upon detection of the signal, the control unit 236 initiates the calibration process. This involves configuring the camera settings 232 according to the first camera setting 120, capturing an image of the analog flow meter display 222, and processing the image to determine the Region of Interest (Rol).

### 2.2. Configuring Camera Settings 120

In some examples, the control unit 236 configures the camera settings 232 according to the first camera setting 120. This involves adjusting various camera settings 232 such as the flashlight power or gain setting, flashlight timing, exposure time, zoom setting, focus setting, ISO sensitivity, and aperture setting. The ability to configure the camera settings 232 allows the measurement module to capture high-quality images of the analog flow meter display under a wide range of lighting conditions and distances.

### 2.2.1. Camera Setting Adjustment Process

The control unit 236 adjusts the camera settings 232 based on the first camera setting 120. This may involve modifying the flashlight power or gain setting to control the intensity of the camera's flash, the flashlight timing to optimize the flashlight time for high quality images and at the same time minimize the battery consumption, setting the exposure time to determine the duration for which the camera's sensor is exposed to light, adjusting the zoom setting to control the focal length and field of view of the camera's lens, setting the focus setting to ensure sharp and clear images of the analog flow meter display 222, setting the ISO sensitivity to control the camera's ability to capture images in low-light conditions, or controlling the aperture setting to adjust the depth of field and control the amount of light entering the camera.

### 2.2.2. Impact on Image Quality

The configuration of the camera settings 232 has a significant impact on the quality of the captured image. For instance, adjusting the flashlight power or gain setting can help to ensure that the analog flow meter display 222 is adequately illuminated, while setting the exposure time can affect the brightness and clarity of the captured image. Similarly, modifying the zoom setting can allow for closer or wider views of the analog flow meter display 222, while adjusting the focus setting can ensure that the numbers and symbols on the display are sharp and clear. Furthermore, setting the ISO sensitivity can enhance the camera's ability to capture images in low-light conditions, and controlling the aperture setting can affect the depth of field and the amount of light entering the camera.

### 2.3. Detecting Region of Interest (Rol) 130

In some examples, the image recognition unit 238 detects a Region of Interest (Rol) in the captured image using a first AI/ML algorithm 130. The Rol is the part of the image where the numbers, symbols, or pointer angles on the analog flow meter display 222 are located. In one example the Rol may be a single area covering all the numbers or pointers. In other examples, the respective number of pointer or needle may have a separate Rol. The ability to detect the Rol allows the measurement module to focus on the relevant parts of the image, thereby improving the accuracy and reliability of the measurement readout.

### 2.3.1. First AI/ML Algorithm

The image recognition unit 238 may, depending on the specific implementation, utilize various AI/ML algorithms to detect the Rol. For instance, it may use a Convolutional Neural Network (CNN) or a Multi-Layer Perceptron (MLP) to detect and classify the numbers and symbols on the analog flow meter display 222 based on their shape and arrangement. Alternatively, it may use a Gaussian Mixture Model (GMM) to analyze color and texture patterns on the analog flow meter display 222 and recognize the unique characteristics of different meter types. In some cases, it may use a Principal Component Analysis (PCA) to reduce the dimensionality of the image data and extract important features for meter type identification.

### 2.3.2. Rol Detection Process

The image recognition unit 238 processes the captured image to detect the Rol. This involves analyzing the image data using the first AI/ML algorithm, identifying the parts of the image where the numbers, symbols, or pointer angles are located, and defining the Rol based on these findings. In case there are only one possible analog flow meter type, the Rol calibrates for the camera rotation in relation to the analog flow meter display 222. In the case there are several possible analog flow meter types, the Rol detection also comprises determination of which analog flow meter type that is determined by the first AI/ML algorithm. The Rol detection process is crucial for ensuring that the measurement readout is focused on the relevant parts of the analog flow meter display 222.

### 2.4. Performing Measurement Readout 140

In some examples, the image recognition unit 238 performs a measurement readout of the Rol using a second AI/ML algorithm 140. This involves identifying the specific numbers, symbols, or pointer angles in the Rol and interpreting these elements to determine the current measurement reading. The ability to perform a measurement readout allows the measurement module to convert the visual information on the analog flow meter display 222 into a digital format that can be easily processed and analyzed.

### 2.4.1. Second AI/ML Algorithm

The image recognition unit 238 may, depending on the specific implementation, utilize various AI/ML algorithms to perform the measurement readout. For instance, it may use a Convolutional Neural Network (CNN) to detect the numerical values, symbols, or pointer angles on the analog flow meter display 222. Alternatively, it may use a Support Vector Machine (SVM) to classify and recognize the numerical values, symbols, or pointer angles based on their distinct features and characteristics. In some cases, it may use a Recurrent Neural Network (RNN) to capture sequential information and patterns in the analog flow meter display 222 for accurate recognition of numbers, symbols, and pointer angles over time.

### 2.4.2. Measurement Readout Process

The image recognition unit 238 processes the Rol to perform the measurement readout. This involves analyzing the Rol using the second AI/ML algorithm, identifying the specific numbers, symbols, or pointer angles in the Rol, and interpreting these elements to determine the current measurement reading. The measurement readout process is crucial for converting the visual information on the analog flow meter display 222 into a digital format that can be easily processed and analyzed.

### 2.5. Determining Reliability Measure 150

In some examples, the image recognition unit 238 determines a reliability measure for the measurement readout. The reliability measure is a quantitative assessment of the accuracy and reliability of the measurement readout. It may be a function of the respective estimated number, symbol, or pointer angle reliability score. The ability to determine a reliability measure allows the measurement module to assess the quality of the measurement readout and identify any potential issues or errors.

### 2.5.1. Reliability Measure Calculation

The image recognition unit 238 calculates the reliability measure based on the results of the measurement readout. This involves assessing the accuracy and reliability of the estimated numbers, symbols, or pointer angles, and calculating a reliability score for each element. As an example, each element may get a reliability score between 0 and 100, where 0/100 means a 0/100% reliability estimate of the number, symbol, or pointer angle in the element. The reliability measure may be a function of the respective estimated number, symbol, or pointer angle reliability score. For instance, the function may be the estimated number, symbol, or pointer angle having the lowest reliability score. As an example, 5 elements are detected, each having reliability score 85, 80, 65, 90, 95. The reliability measure may in this case be 65. Other functions may be the estimated number, symbol, or pointer angle with the second lowest reliability score (i.e., 80), the estimated number, symbol, or pointer angle with the third lowest reliability score (i.e., 85), or the average reliability score of the estimated numbers, symbols, or pointer angles (i.e., 83).

### 2.5.2. Factors Affecting Reliability

Various factors can affect the reliability of the measurement readout and, consequently, the reliability measure. These factors include the quality of the captured image, the accuracy of the Rol detection, and the complexity of the analog flow meter display 222. By considering these factors, the image recognition unit 238 can accurately assess the reliability of the measurement readout and identify any potential issues or errors.

### 2.6. Repeating Process for Multiple Camera Settings 160

The calibration method involves repeating the process for multiple camera settings 232. This involves configuring the camera settings 232 according to a second camera setting, capturing a new image of the analog flow meter 222, detecting a new Rol, performing a new measurement readout, and determining a new reliability measure. The ability to repeat the process for multiple camera settings 232 allows the measurement module to test different configurations and select the one that provides the most accurate and reliable measurement readout.

### 2.6.1. Iterative Calibration Process

The calibration method involves an iterative process that is repeated for each camera setting. For each iteration, the control unit 236 configures the camera settings 232, the camera 230 captures an image of the analog flowmeter display 222 , the image recognition unit 238 detects the Rol and performs the measurement readout, and the image recognition unit 238 determines the reliability measure. This iterative process allows the measurement module to test different camera settings 232 and identify the one that provides the most accurate and reliable measurement readout.

### 2.6.2. Comparison of Reliability Measures

After repeating the process for multiple camera settings 232, the control unit 236 compares the reliability measures for each setting. This involves assessing the reliability measures for each camera setting and selecting the setting with the best reliability measure. The ability to compare reliability measures and select the best camera setting allows the measurement module to optimize its performance and ensure accurate and reliable measurement readouts.

### 2.7. Selecting Camera Setting with Best Reliability Measure 170

In some examples, the control unit 236 selects the camera setting 232 with the best reliability measure. This involves comparing the reliability measures for each camera setting 232 and selecting the setting that provides the most accurate and reliable measurement readout. The ability to select the best camera setting 232 based on the reliability measure allows the measurement module to optimize its performance and ensure accurate and reliable measurement readouts.

### 2.8 Determining the analog meter type 165

In some examples, when there are possibilities for more than one analog meter type, the control unit 236 also determines an analog flow meter type for the analog flow meter 220 associated to the selected camera setting 232. The ability to select analog flow meter type based on the reliability measure allows the measurement module to optimize its performance and ensure accurate and reliable measurement readouts.

### 3. Operational Process

The operational process of the calibration method for an analog flow meter measurement module involves several key steps that are designed to ensure accurate and reliable measurement readouts. These steps include the calibration process, which involves monitoring a calibration trigger signal, configuring the camera settings 232, detecting a Region of Interest (Rol) in the captured image, performing a measurement readout, determining a reliability measure, repeating the process for multiple camera settings 232, and selecting the camera setting with the best reliability measure. The operational process also includes the measurement readout process, which involves capturing an image of the analog flow meter display, processing the image to perform the measurement readout, and transmitting the measurement readout to a remote server node.

### 3.1. Calibration Process

In some examples, the calibration process begins with the monitoring of a calibration trigger signal 110 using the control unit 236. This signal can be generated under various circumstances, such as when the measurement module 225 is installed, when there is a need for recalibration due to unreliable measurement readouts, or when a signal is received from a server node 250 indicating the need for recalibration. The ability to monitor and respond to a calibration trigger signal allows the measurement module to maintain accurate and reliable measurement readouts at all times.

### 3.1.1. Initial Calibration

In some examples, the initial calibration process is triggered when the measurement module 225 is installed. This involves the control unit 236 monitoring a calibration trigger signal 110, which is generated once the measurement module is installed. Upon detection of the signal, the control unit initiates the calibration process, which involves configuring the camera settings 232 according to a first camera setting 120, capturing an image of the analog flow meter display 222, detecting a Region of Interest (Rol) in the captured image using a first AI/ML algorithm 130, performing a measurement readout of the Rol using a second AI/ML algorithm 140, determining a reliability measure for the measurement readout 150, repeating the process for multiple camera settings 160, and selecting the camera setting with the best reliability measure 170. This initial calibration process ensures that the measurement module is properly calibrated and ready to perform accurate and reliable measurement readouts.

### 3.1.2. Recalibration

In some examples, the recalibration process is triggered when there is a need for recalibration due to unreliable measurement readouts, or when a signal is received from a server node 250 indicating the need for recalibration. This involves the control unit 236 monitoring a calibration trigger signal 110, which is generated under these circumstances. Upon detection of the signal, the control unit initiates the recalibration process, which involves repeating the steps of the initial calibration process. This recalibration process ensures that the measurement module continues to perform accurate and reliable measurement readouts, even when the initial calibration settings are no longer optimal.

### 3.2. Measurement Readout Process

In some examples, the measurement readout process involves capturing an image of the analog flow meter display 222, analyzing the image using the second AI/ML algorithm 140 to perform the measurement readout and transmitting the measurement readout to a remote server node 250. This process is performed by the measurement module 225 after the calibration process has been completed.

### 3.2.1. Image Capture and Analysis

In some examples, the image capture and analysis process involves the camera 230 capturing an image of the analog flow meter display 222 under the control of the control unit 236, which configures the camera settings 232 according to the selected camera setting. The captured image is then processed by the image recognition unit 238, which detects a Region of Interest (Rol) in the image using a first AI/ML algorithm 130 and performs a measurement readout of the Rol using a second AI/ML algorithm 140. The ability to capture and analyze images of the analog flow meter display 222 allows the measurement module to convert the visual information on the display into a digital format that can be easily processed and analyzed.

### 3.2.2. Data Transmission to Server Node

In some examples, the data transmission process involves the wireless communication unit 240 transmitting the measurement readout to a remote server node 250. This process is performed after the image recognition unit 238 has performed the measurement readout and determined a reliability measure for the readout. The server node 250 can then analyze the measurement readout, generate reports, and send measurement configurations back to the measurement module 225 if necessary. The ability to transmit measurement readouts to a remote server node allows the measurement module to provide real-time measurement data to users or systems located remotely from the analog flow meter.

### 4. Description of Examples of the Disclosure

In this section, we provide detailed descriptions of two examples of the disclosure. These examples illustrate how the calibration method for an analog flow meter measurement module can be applied to different types of analog flow meters. The examples also demonstrate the advantages of the features described in the claims, such as the ability to perform accurate and reliable measurement readouts under various conditions and the flexibility to adapt to different types of analog flow meters.

### 4.1. Example 1: Analog Flow Meter Type A

In one example, the calibration method is applied to an analog flow meter of Type A 1000a. This type of analog flow meter display 222 has a specific arrangement of numbers and symbols on its display, which presents unique challenges for the measurement readout process.

### 4.1.1. Rol Parameters

In this example, the image recognition unit 238 detects a Region of Interest (Rol) in the captured image using a first AI/ML algorithm 130. The Rol parameters for this type of analog flow meter may comprise specific areas on the display where the numbers, symbols or pointers or needles are located, i.e., the areas 1030a, 1031a and 1032a, where 1030a shows Rol comprising numbers 1010a, and 1031a, 1032a shows Rols comprising pointers or needles 1020a, 1021a. These parameters may be determined based on the unique arrangement and format of the numbers and symbols on the display of the analog flow meter of Type A.

### 4.1.2. Calibration Process

The calibration process for this example involves the control unit 236 monitoring a calibration trigger signal 110, configuring the camera settings 232 according to a first camera setting 120, and the camera 230 capturing an image of the analog flow meter display 222. The image recognition unit 238 then processes the captured image to detect the Rol 1030a, 1031a, 1032a, using the first AI/ML algorithm 130, performs a measurement readout 1010a, 1020a, 1021a, of the Rol using the second AI/ML algorithm 140, and determines a reliability measure for the measurement readout 150. This process is repeated for multiple camera settings 160, and the control unit 236 selects the camera setting with the best reliability measure 170.

The calibration process for this example may also comprise determining an analog flow meter type for the selected camera setting 165. This step may be necessary if more than one type of analog flow meter is possible. The determination of the analog flow meter type may be based on the unique characteristics of the numbers and symbols on the display of the analog flow meter of Type A, as identified by the image recognition unit 238 during the Rol detection process.

### 4.2. Example 2: Analog Flow Meter Type B

In another example, the calibration method is applied to an analog flow meter of Type B 1000b. This type of analog flow meter display 222 has a different arrangement of numbers and symbols on its display compared to Type A, which presents a different set of challenges for the measurement readout process.

### 4.2.1. Rol Parameters

In this example, the image recognition unit 238 detects a Region of Interest (Rol) in the captured image using a first AI/ML algorithm 130. The Rol parameters for this type of analog flow meter may comprise specific areas on the display where the numbers and symbols are located, i.e., the area 1030b comprising numbers 1010b. These parameters may be determined based on the unique arrangement and format of the numbers and symbols on the display of the analog flow meter of Type B.

### 4.2.2. Calibration Process

The calibration process for this example involves the control unit 236 monitoring a calibration trigger signal 110, configuring the camera settings 232 according to a first camera setting 120, and the camera 230 capturing an image of the analog flow meter display 222. The image recognition unit 238 then processes the captured image to detect the Rol 1030b using the first AI/ML algorithm 130, performs a measurement readout 1010b of the Rol using the second AI/ML algorithm 140, and determines a reliability measure for the measurement readout 150. This process is repeated for multiple camera settings 160, and the control unit 236 selects the camera setting with the best reliability measure 170.

The calibration process for this example may also comprise determining an analog flow meter type, 1000a and 1000b for the selected camera setting 165. This step may be necessary if more than one type of analog flow meter is possible. The determination of the analog flow meter type may be based on the unique characteristics of the numbers and symbols on the display of the analog flow meter of Type B, as identified by the image recognition unit 238 during the Rol detection process.

In both examples, the measurement module 225 may comprise a wireless communication unit 240 for transmitting measurement readouts to a remote server node 250 and receiving measurement configurations from the server node. The measurement module may also comprise a battery 242 for providing power to the camera 230, processor 234, and wireless communication unit 240. These additional components enhance the functionality and versatility of the measurement module, enabling it to operate independently and communicate with a remote server node for centralized monitoring and management of the analog flow meter.

### 5. Potential Applications

The calibration method for an analog flow meter measurement module, as described in the disclosure, has a wide range of potential applications. These applications span across various industries and sectors, including residential, industrial, and energy sectors. The method's ability to perform accurate and reliable measurement readouts under various conditions and its flexibility to adapt to different types of analog flow meters make it a versatile solution for a variety of metering needs.

### 5.1. Water Flow Metering

In some examples, the calibration method can be applied to water flow metering. Water flow meters are commonly used in both residential and industrial settings to measure the volume of water used. The ability to perform accurate and reliable measurement readouts is crucial for ensuring accurate billing, monitoring water usage, and detecting leaks or anomalies in the water supply system.

### 5.1.1. Residential Water Metering

In one example, the calibration method may be used for residential water metering. Residential water meters are typically analog flow meters that display the volume of water used in a household. The measurement module 225, comprising a camera 230, a processor 234 with a control unit 236 and an image recognition unit 238, a wireless communication unit 240, and a battery 242, can be attached to the residential water meter. The control unit 236 can monitor a calibration trigger signal 110, configure the camera settings 232, and initiate the image capture process. The image recognition unit 238 can then process the captured image to detect the Region of Interest (Rol), perform the measurement readout, and determine a reliability measure for the readout. This process can be repeated for multiple camera settings 232, and the control unit 236 can select the camera setting with the best reliability measure. The wireless communication unit 240 can transmit the measurement readouts to a remote server node 250, allowing for remote monitoring and management of the residential water meter.

### 5.1.2. Industrial Water Metering

In another example, the calibration method may be used for industrial water metering. Industrial water meters are often larger and more complex than residential water meters, and they may display a variety of measurements, such as flow rate, total volume, and pressure. The measurement module 225 can be attached to the industrial water meter, and the calibration method can be performed in a similar manner as described for the residential water metering. The ability to perform accurate and reliable measurement readouts under various conditions, such as low light or complex meter displays, makes the calibration method a suitable solution for industrial water metering.

### 5.2. Gas Flow Metering

In some examples, the calibration method can be applied to gas flow metering. Gas flow meters are used to measure the volume of gas used in residential and industrial settings. Like water flow meters, gas flow meters require accurate and reliable measurement readouts for billing, monitoring gas usage, and detecting leaks or anomalies in the gas supply system.

### 5.2.1. Residential Gas Metering

In one example, the calibration method may be used for residential gas metering. Residential gas meters are typically analog flow meters that display the volume of gas used in a household. The measurement module 225 can be attached to the residential gas meter, and the calibration method can be performed in a similar manner as described for the residential water metering. The wireless communication unit 240 can transmit the measurement readouts to a remote server node 250, allowing for remote monitoring and management of the residential gas meter.

### 5.2.2. Industrial Gas Metering

In another example, the calibration method may be used for industrial gas metering. Industrial gas meters are often larger and more complex than residential gas meters, and they may display a variety of measurements, such as flow rate, total volume, and pressure. The measurement module 225 can be attached to the industrial gas meter, and the calibration method can be performed in a similar manner as described for the industrial water metering. The ability to perform accurate and reliable measurement readouts under various conditions, such as low light or complex meter displays, makes the calibration method a suitable solution for industrial gas metering.

### 5.3. Energy Flow Metering

In some examples, the calibration method can be applied to energy flow metering. Energy flow meters are used to measure the amount of energy used in residential and industrial settings. These meters may measure various types of energy, such as electricity and thermal energy.

### 5.3.1. Electricity Metering

In one example, the calibration method may be used for electricity metering. Electricity meters are typically analog flow meters that display the amount of electricity used in a household or industrial facility. The measurement module 225 can be attached to the electricity meter, and the calibration method can be performed in a similar manner as described for the residential water metering and the industrial gas metering. The wireless communication unit 240 can transmit the measurement readouts to a remote server node 250, allowing for remote monitoring and management of the electricity meter.

### 5.3.2. Thermal Energy Metering

In another example, the calibration method may be used for thermal energy metering. Thermal energy meters are used to measure the amount of heat energy used in a household or industrial facility. The measurement module 225 can be attached to the thermal energy meter, and the calibration method can be performed in a similar manner as described for the other types of metering. The wireless communication unit 240 can transmit the measurement readouts to a remote server node 250, allowing for remote monitoring and management of the thermal energy meter.

In all these potential applications, the calibration method for an analog flow meter measurement module provides a versatile and reliable solution for metering needs in various sectors. Its ability to perform accurate and reliable measurement readouts under various conditions and its flexibility to adapt to different types of analog flow meters make it a valuable tool for residential, industrial, and energy sectors.

### 6. List of examples

Example 1: A calibration method for a measurement module (225) for attachment to an analog flow meter, the analog flow meter measurement module (225) comprising a camera (230) having a plurality of possible settings, the method comprising monitoring (110) a calibration trigger signal using a control unit (236), configuring (120) the camera according to a first camera setting (232) using the control unit (236), detecting (130) a Region of Interest (Rol) in an image of the analog flow meter display (222), generated using the camera, using a first AI/ML algorithm by an image recognition unit (238), performing (140) a measurement readout of the Rol using a second AI/ML algorithm by the image recognition unit (238), determining (150) a reliability measure for the measurement readout by the image recognition unit (238), repeating (160) the steps 110-150 for at least a second camera setting (232), and selecting (170) a camera setting (232) with the best reliability measure by the control unit (236).

Example 2: The calibration method of example 1, wherein the camera settings (232) is one of a flashlight power or gain setting, flashlight timing, an exposure time, a zoom setting, a focus setting, an ISO sensitivity, or an aperture setting.

Example 3: The calibration method according to example 1 or 2, further comprising determining (165) an analog flow meter type for the analog flow meter associated to the selected camera setting (232).

Example 4: The calibration method according to any one of examples 1 to 3, wherein the calibration trigger signal (110) is one of a signal generated once the measurement module (225) is installed, a signal generated if there is a need for recalibration due to unreliable measurement readouts, or a signal received from a server node (250) indicating the need for recalibration.

Example 5: The calibration method according to any one of examples 1 to 4, wherein the reliability measure (150) is a function of the respective estimated number, symbol, or pointer angle reliability score.

Example 6: The calibration method according to example 5, wherein the function is one of the estimated number, symbol, or pointer angle having the lowest reliability score, the estimated number, symbol, or pointer angle with the second lowest reliability score, the estimated number, symbol, or pointer angle with the third lowest reliability score, or the average reliability score of the estimated numbers, symbols, or pointer angles.

Example 7: The calibration method according to examples 1 or 6, wherein the first AI/ML algorithm (130) is one of a Convolutional Neural Network (CNN), a Multi-Layer Perceptron (MLP), a Gaussian Mixture Model (GMM), or a Principal Component Analysis (PCA).

Example 8: The calibration method according to any one of examples 1 to 7, wherein the second AI/ML algorithm (140) is one of a Convolutional Neural Network (CNN), a Support Vector Machine (SVM), or a Recurrent Neural Network (RNN).

Example 9: A measurement module (225) configured to perform the calibration method according to any one of examples 1 to 8, comprising a camera (230) for capturing images of the analog flow meter display (222), a processor (234) comprising a control unit (236) and an image recognition unit (238), a wireless communication unit (240) for transmitting measurement readouts to and receiving measurement configurations from a remote server node (250), and a battery (242) for providing power to the camera, processor, and wireless communication unit.

Example 10: The measurement module (225) according to example 9, wherein the wireless communication unit (240) uses communication protocols selected from the group consisting of WiFi, LoRa, Bluetooth, NB-IoT, and NR Red Cap.

Example 11: A system for calibrating a measurement module (225), comprising an analog flow meter measurement module (225) according to example 9 or 10, a server node (250) configured to receive measurement readouts from the analog flow meter measurement module (225) and transmit measurement configurations to the analog flow meter measurement module (225), and a communication network for enabling communication between the analog flow meter measurement module (225) and the server node (250).

Example 12: The system according to example 11, wherein the server node (250) is configured to generate a calibration trigger signal (110) based on one or more predetermined conditions.

Example 13: The system according to example 12, wherein the predetermined conditions include one or more of a scheduled calibration time, or a detected degradation in the reliability of the measurement readouts received from the measurement module (225).

Example 14: A non-transitory computer-readable medium storing instructions that, when executed by a processor (234) of an analog flow meter measurement module (225) according to examples 9 or 10, cause the analog flow meter measurement module (225) to perform the calibration method according to any one of examples 1 to 8.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A calibration method for a measurement module (225) for attachment to an analog flow meter, the analog flow meter measurement module (225) comprising a camera (230) having a plurality of possible settings, the method comprising:
monitoring (110) a calibration trigger signal using a control unit (236);
configuring (120) the camera (230) according to a first camera setting (232) using the control unit (236);
detecting (130) a Region of Interest (Rol) in an image of the analog flow meter display (222), generated using the camera (230), using a first AI/ML algorithm by an image recognition unit (238);
performing (140) a measurement readout of the Rol using a second AI/ML algorithm by the image recognition unit (238);
determining (150) a reliability measure for the measurement readout by the image recognition unit (238);
repeating (160) the steps 110-150 for at least a second camera setting; and
selecting (170) a camera setting with the best reliability measure by the control unit (236).

2. The calibration method according to claim 1, wherein the camera settings (232) is one of;
a flashlight power or gain setting,
a flashlight timing,
an exposure time,
a zoom setting,
a focus setting,
an ISO sensitivity, or
an aperture setting.

3. The calibration method according to any one of claims 1 to 2, further comprising determining (165) an analog flow meter type for the analog flow meter associated to the selected camera setting (232).

4. The calibration method according to any one of claims 1 to 3, wherein the calibration trigger signal (110) is one of
a signal generated once the measurement module (225) is installed,
a signal generated if there is a need for recalibration due to unreliable measurement readouts, or
a signal received from a server node (250) indicating the need for recalibration.

5. The calibration method according to any one of claims 1 to 4, wherein the reliability measure (150) is a function of the respective estimated number, symbol, or pointer angle reliability score.

6. The calibration method according to claim 5, wherein the function is one of the estimated number, symbol, or pointer angle having the lowest reliability score, the estimated number, symbol, or pointer angle with the second lowest reliability score, the estimated number, symbol, or pointer angle with the third lowest reliability score, or the average reliability score of the estimated numbers, symbols, or pointer angles.

7. The calibration method according to claims 1 or 6, wherein the first AI/ML algorithm (130) is one of a Convolutional Neural Network (CNN), a Multi-Layer Perceptron (MLP), a Gaussian Mixture Model (GMM), or a Principal Component Analysis (PCA).

8. The calibration method according to any one of claims 1 to 7, wherein the second AI/ML algorithm (140) is one of a Convolutional Neural Network (CNN), a Support Vector Machine (SVM), or a Recurrent Neural Network (RNN).

9. A measurement module (225) configured to perform the calibration method according to any one of claims 1 to 8, comprising:
a camera (230) for capturing images of the analog flow meter display (222);
a processor (234) comprising a control unit (236) and an image recognition unit (238);
a wireless communication unit (240) for transmitting measurement readouts to and receiving measurement configurations from a remote server node (250); and
a battery (242) for providing power to the camera, processor, and wireless communication unit.

10. The measurement module (225) according to claim 9, wherein the wireless communication unit (240) uses communication protocols selected from the group consisting of WiFi, LoRa, Bluetooth, NB-IoT, and NR Red Cap.

11. A system for calibrating a measurement module (225), comprising:
an analog flow meter measurement module (225) according to claim 9 or 10;
a server node (250) configured to receive measurement readouts from the analog flow meter measurement module (225) and transmit measurement configurations to the analog flow meter measurement module (225); and
a communication network for enabling communication between the analog flow meter measurement module (225) and the server node (250).

12. The system according to claim 11, wherein the server node (250) is configured to generate a calibration trigger signal (110) based on one or more predetermined conditions.

13. The system according to claim 12, wherein the predetermined conditions include one or more of:
a scheduled calibration time, or
a detected degradation in the reliability of the measurement readouts received from the measurement module (225).

14. A non-transitory computer-readable medium storing instructions that, when executed by a processor (234) of an analog flow meter measurement module (225) according to claims 9 or 10, cause the analog flow meter measurement module (225) to perform the calibration method according to any one of claims 1 to 8.
